# FASCICULE DE BREVET EUROPEEN

(11) **EP 1 631 475 B1**
(45) Date de publication et mention de la délivrance du brevet: **22.10.2008**
(21) Numéro de dépôt: 04767279.5
(22) Date de dépôt: 07.06.2004
(51) Int. Cl.: B60Q 1/04

(54) **STRUCTURE DE RECEPTION D'UN BLOC OPTIQUE**
GEHÄUSEKONSTRUKTION FÜR LAMPENEINHEIT
LIGHT UNIT HOUSING STRUCTURE

(30) Priorité: 06.06.2003 FR 0306906
(43) Date de publication de la demande: 08.03.2006
(73) Titulaire: COMPAGNIE PLASTIC OMNIUM, 69007 Lyon (FR)
(72) Inventeur: VERWAERDE, Marc, F-38460 Panossas (FR); ANDRE, Gérald, F-01500 Ambérieu en Bugey (FR); MICHAUT, Alexis, Simpsonville SC 29681 (US)
(74) Mandataire: Remy, Vincent Noel Paul
(86) Numéro de dépôt international: PCT/FR2004/001413
(87) Numéro de publication internationale: WO 2004/110810

(56) Documents cités:
- EP-A- 1 127 739
- EP-A- 1 232 932
- DE-A- 19 946 995
- PATENT ABSTRACTS OF JAPAN vol. 2003, no. 05, 12 mai 2003 (2003-05-12) -& JP 2003 011848 A (NISSAN MOTOR CO LTD), 15 janvier 2003 (2003-01-15)

## Description

La présente invention concerne une structure de réception d'un bloc optique, une pièce de carrosserie pouvant recevoir un bloc optique et un module extérieur comprenant une pièce de carrosserie et un bloc optique.

On sait que les techniques actuelles de montage des véhicules automobiles privilégient la réalisation de modules plus ou moins complexes, qui sont constitués en dehors de la chaîne de montage et sont ensuite rapportés sur la caisse du véhicule avec tous les organes dont ils sont équipés, ce qui réduit considérablement la longueur des chaînes de montage ainsi que les délais de fabrication des véhicules.

C'est ainsi que les blocs optiques sont traditionnellement montés sur des structures de réception du type faces avant techniques, en étant positionnés et orientés sur ces structures de réception selon des cotes définies par rapport à une caisse d'un véhicule théorique. Ce véhicule théorique est matérialisé par un gabarit qui sert de référentiel lors de la fixation des blocs optiques sur les structures de réception.

En pratique, les caisses des véhicules présentent des variations dimensionnelles relativement importantes et les modules rapportés sur de telles caisses peuvent positionner les blocs optiques de manière non satisfaisante. Une reprise de réglage peut alors s'avérer nécessaire, pour repositionner les blocs optiques.

De façon plus précise, la difficulté résulte du fait que les intervalles de tolérance de plusieurs pièces se cumulent lors du montage des blocs optiques.

En effet, en dehors des intervalles de tolérance propres au bloc optique et à la caisse, le recours à un gabarit ajoute des intervalles de tolérance liés d'une part au positionnement des blocs optiques sur le module par rapport au gabarit et d'autre part au positionnement du module sur la caisse.

On connaît par ailleurs de EP 1 232 932 une structure de réception d'un bloc optique selon le préambule de la revendication 1, participant à la mise en référence du vitrage d'optique avec l'aile et la peau de pare-chocs.

Un but de la présente invention est de réduire ce cumul d'intervalles de tolérance dans un module extérieur d'un véhicule automobile.

L'invention présente d'autres avantages qui apparaîtront à la lecture de la description qui va suivre.

La présente invention a pour objet une structure de réception d'un bloc optique muni d'un vitrage et destiné à équiper une aile de véhicule automobile, l'aile et le vitrage comprenant des moyens de mise en référence du vitrage du bloc optique sur l'aile, **caractérisée en ce qu**'elle comporte :
- des moyens de fixation de la structure de réception sur l'aile,
- et des moyens de fixation du bloc optique sur la structure de réception, qui conservent la mise en référence du vitrage sur l'aile imposée par les moyens de mise en référence.

Suivant d'autres caractéristiques optionnelles de:
- la structure de réception est réalisée en matière plastique ;
- elle est agencée pour renforcer localement l'aile ;
- les moyens de fixation du bloc optique sur la structure de réception sont les uniques moyens de fixation du bloc optique sur le véhicule ;
- les dimensions de la structure de réception sont telles qu'elle se loge entre des rebords supérieur et inférieur de l'aile ;
- elle est conformée pour éviter le cloquage de l'aile au voisinage du bloc optique,
- elle comporte des moyens de soutien du bloc optique fixé à l'aile, ces moyens de soutien étant destinés à être montés sur la structure du véhicule ;
- les moyens de soutien sont solidaires de la structure de réception ;
- les moyens de soutien comportent au moins un degré de liberté par rapport à l'aile ;
- les moyens de soutien consistent en une glissière ;
- les moyens de fixation de la structure de réception sur l'aile consistent en un adhésivage, un collage, un soudage, un clippage, un rivetage, un boutterollage ou un vissage de la structure de réception sur l'aile ;
- les moyens de fixation de la structure de réception sur l'aile et/ou les moyens de fixation du bloc optique sur la structure de réception sont fusibles ;
- elle comprend des moyens de fixation d'un passage de roue ;
- elle est agencée pour absorber l'énergie de chocs de jambes ou de hanches de piétons ;
- elle comprend une interface de liaison entre l'aile et une pièce de structure du véhicule ;
- l'interface de liaison consiste en des fixations glissantes ;
- l'interface de liaison consiste en un absorbeur d'énergie destiné à traiter les chocs de têtes de piétons ; et
- elle comprend des moyens de fixation pour des organes fonctionnels du véhicule tels qu'un bocal lave-glace, un réservoir, des lave-projecteur, un éclairage ou un dispositif électronique.

L'invention a également pour objet un module extérieur de véhicule automobile comportant une aile et un bloc optique comprenant un vitrage, caractérisé en ce qu'il comprend une structure de réception telle que décrite ci-dessus.

L'invention a également pour objet une aile de véhicule automobile comprenant une structure de réception telle que décrite ci-dessus.

L'invention a enfin pour objet un procédé de montage d'un bloc optique sur une aile de carrosserie munie d'une structure de réception telle que décrite ci-dessus, **caractérisé en ce qu**'il consiste à :
- mettre en référence le vitrage du bloc optique sur l'aile ; et
- fixer le bloc optique à la structure de réception par des moyens présents respectivement sur le bloc optique et sur la structure de réception pour conserver définitivement la position obtenue lors de la mise en référence.

L'invention sera mieux comprise à la lecture de la description qui va suivre, donnée uniquement à titre d'exemple et faite en se référant aux dessins dans lesquels :

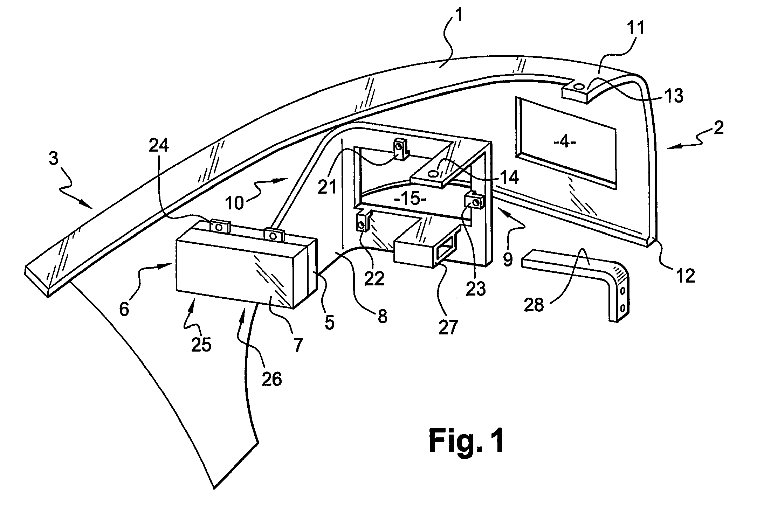

- la figure 1 représente, en perspective éclatée, l'intérieur d'une aile avant gauche d'un module extérieur selon un mode de réalisation particulier de l'invention,

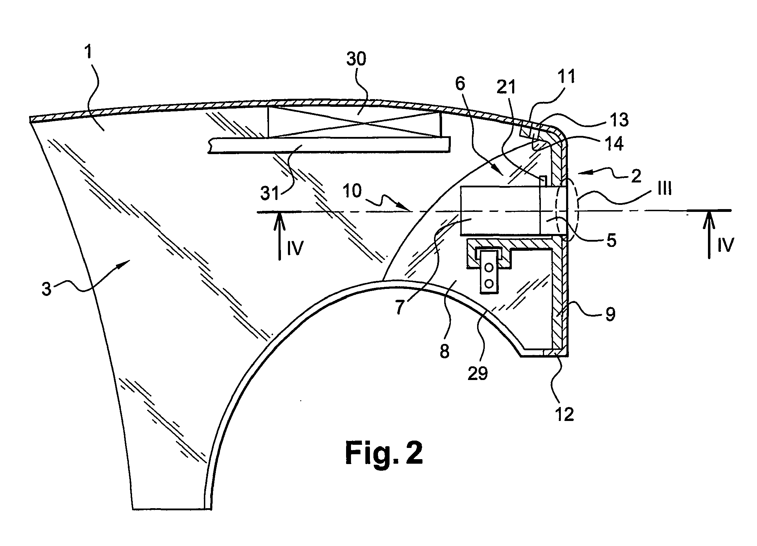

- la figure 2 est une vue en élévation selon II de la figure 1,
- la figure 3 est une vue agrandie de la région III de la figure 2,
- la figure 4 est une section selon IV-IV de la figure 2.

Sur les figures, les différentes pièces sont représentées de façon schématique, leur forme pouvant varier selon l'application souhaitée.

On a représenté une aile 1 en matière plastique comprenant une partie avant 2 et une partie latérale 3. La partie avant délimite une ouverture 4 pour un vitrage 5 d'un bloc optique 6 comprenant, réuni au vitrage 5, un boîtier 7.

Une structure de réception 8 est destinée à s'intercaler entre la partie avant 2 de l'aile 1 et le bloc optique 6. Cette structure, réalisée en polypropylène chargé de 30 à 40 % de talc, comprend une partie avant 9 conformée pour venir s'appliquer contre la partie avant 2 de l'aile et une partie latérale 10 conformée pour suivre la partie latérale 3 de l'aile. Les dimensions de la structure 8 sont telles que cette dernière se loge entre des rebords supérieur 11 et inférieur 12 de l'aile. Des lignes de soudage (non représentées) constituent des moyens de fixation de la structure de réception 8 sur l'aile 1. En outre, des pattes de fixation 13 et 14 sont prévues sur le bord supérieur 11 de l'aile et respectivement sur la structure de réception 8 pour compléter ces moyens de fixation.

Dans sa partie avant 9, la structure de réception 8 comporte une fenêtre 15 qui coïncide avec l'ouverture 4 de l'aile lorsque ladite structure y est solidarisée. Le vitrage 5 du bloc optique 6 peut ainsi traverser la fenêtre 15 pour prendre place dans l'ouverture 4 et venir à affleurement de la face avant de l'aile.

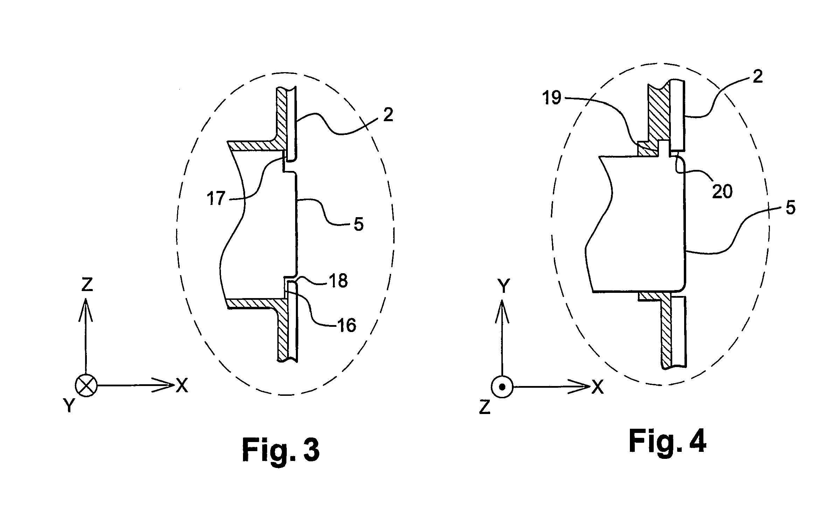

La périphérie de l'ouverture 4, mieux visible sur les figures 3 et 4, comprend des portées constituant des points d'appui, également désignés points d'isostatisme qui assurent la mise en référence du vitrage du bloc optique sur l'aile.

Deux premières portées 16 et 17 situées chacune sur un montant horizontal de l'ouverture 4 procurent des positionnements selon la direction longitudinale (X) du véhicule. Une portée 18 située sur le montant horizontal inférieur de l'ouverture 4 procure un positionnement selon la direction verticale (Z).

Par ailleurs, le vitrage 5 du bloc optique comporte un pion 19 sur un de ses bords latéraux, pion 19 qui pénètre dans un dégagement demi-oblong ménagé dans le rebord de l'aile. Ce pion procure un troisième positionnement selon la direction X et un deuxième positionnement selon la direction Z.

Enfin, une portée 20 procure un positionnement selon la direction transversale (Y) du véhicule, sur l'un des montants latéraux de l'ouverture 4.

Grâce à ces six points d'appui, le vitrage 5 se trouve convenablement mis en référence par rapport à l'aile lorsqu'il est plaqué contre la face avant 2 de l'aile.

Lors du montage, le bloc optique 6 est temporairement maintenu dans cette position de mise en référence du vitrage sur l'aile et le bloc optique est fixé à la structure de réception par vissage au travers de pattes de fixation 21, 22, 23, 24, 25, 26 formées respectivement sur le bloc optique 6 et sur la structure de réception 8. Ces pattes présentent la caractéristique de pouvoir se déformer pour conserver définitivement la position du bloc optique sur la structure de réception, obtenue lors de la mise en référence du vitrage sur l'aile.

Par ailleurs, compte tenu du poids du bloc optique 6, la structure de réception est pourvue de moyens de soutien sous la forme d'une glissière 27 qui est réalisée d'un seul tenant avec sa partie avant 9 et se trouve juste en dessous de l'emplacement du bloc optique et d'une équerre 28 destinée à être montée sur une pièce de structure du véhicule. Ces moyens de soutien comportent un degré de liberté par rapport à l'aile : le coulissement selon la direction transversale Y. Ainsi, l'aile peut subir des dilatations thermiques résultant par exemple de son ensoleillement sans que le soutien du bloc optique ne soit dégradé.

La glissière 27 est avantageusement fusible, ou sa fixation inférieure débrayable, ce qui peut préserver le bloc optique lors d'un choc à haute énergie (choc Danner).

La structure de réception peut en outre présenter d'autres fonctionnalités, à savoir :
- Présence de moyens de fixation d'un passage de roue le long du bord inférieur 29 de la partie latérale 10 de la structure de réception, bord 29 qui suit la forme de l'aile,
- Présence d'une partie au moins d'une interface de liaison 30 reliant le bord supérieur de l'aile à un longeron supérieur 31 du véhicule,
- Configuration permettant l'absorption d'énergie en cas de chocs de la partie avant 2 de l'aile avec des jambes ou des hanches de piétons,
- Configuration procurant un soutien en cas d'appui fessier sur l'aile,
- Fusibilité des moyens de fixation entre l'aile et la structure de réception, la fusibilité pouvant porter sur les pattes 13, 14 ou sur des éléments de liaison entre elles,
- Fusibilité des moyens de fixation entre le bloc optique 6 et la structure de réception, la fusibilité pouvant porter sur les pattes 21-26 ou sur des éléments de liaison entre elles,
- Support d'organes fonctionnels tels que réservoirs, dispositifs électroniques et/ou éclairants et/ou nettoyants.

Chacune de ces fonctionnalités peut d'autant plus facilement être ajoutée à la structure de réception que cette dernière est réalisée en matière plastique.

Parmi les avantages procurés par la structure de réception, on peut citer le fait que celle-ci renforce localement l'aile et, en se dilatant peu, limite les déplacements de l'aile autour du bloc optique en cas d'ensoleillement, tandis qu'en dehors de la région de l'optique, l'aile peut gonfler de manière beaucoup plus homogène. On peut également relever que lorsque la structure de réception est réalisée en matière plastique souple, elle peut résister à un choc Danner, ce qui justifie l'intérêt que peut présenter l'intégration de fonctions à ladite structure de réception.

## Revendications

1. Structure de réception (8) d'un bloc optique (6) muni d'un vitrage (5) et destiné à équiper une aile (1) de véhicule automobile, l'aile (1) et le vitrage (5) comprenant des moyens (16-20) de mise en référence du vitrage (5) du bloc optique sur l'aile, **caractérisée en ce qu'**elle comporte :
- des moyens (13,14) de fixation de la structure de réception (8) sur l'aile,
- et des moyens (21-26) de fixation du bloc optique (6) sur la structure de réception (8), qui conservent la mise en référence du vitrage (5) sur l'aile imposée par les moyens de mise en référence.

2. Structure de réception selon la revendication 1, réalisée en matière plastique.

3. Structure de réception selon la revendication 1 ou 2, agencée pour renforcer localement l'aile (1).

4. Structure de réception selon l'une quelconque des revendications 1 à 3, dans laquelle les moyens de fixation du bloc optique sur la structure de réception sont les uniques moyens de fixation du bloc optique sur le véhicule.

5. Structure de réception selon l'une quelconque des revendications 1 à 4, dont les dimensions sont telles qu'elle se loge entre des rebords supérieur (11) et inférieur (12) de l'aile.

6. Structure de réception selon l'une quelconque des revendications 1 à 5, conformée pour éviter le cloquage de l'aile (1) au voisinage du bloc optique (6).

7. Structure de réception selon l'une quelconque des revendications 1 à 6, comportant des moyens (27,28) de soutien du bloc optique fixé à l'aile, ces moyens de soutien étant destinés à être montés sur la structure du véhicule.

8. Structure de réception selon la revendication 7, dans laquelle les moyens de soutien (27,28) sont solidaires de la structure de réception.

9. Structure de réception selon la revendication 7 ou 8, dans laquelle les moyens de soutien (27,28) comportent au moins un degré de liberté par rapport à l'aile.

10. Structure de réception selon la revendication 9, dans laquelle les moyens de soutien consistent en une glissière (28).

11. Structure de réception selon l'une quelconque des revendications 1 à 10, dans laquelle les moyens de fixation de la structure de réception (8) sur l'aile consistent en un adhésivage, un collage, un soudage, un clippage, un rivetage, un boutterollage ou un vissage de la structure de réception sur l'aile.

12. Structure de réception selon l'une quelconque des revendications 1 à 11, dans laquelle les moyens de fixation de la structure de réception (8) sur l'aile et/ou les moyens de fixation du bloc optique (6) sur la structure de réception (8) sont fusibles.

13. Structure de réception selon l'une quelconque des revendications 1 à 12, comprenant des moyens de fixation d'un passage de roue.

14. Structure de réception selon l'une quelconque des revendications 1 à 13, agencée pour absorber l'énergie de chocs de jambes ou de hanches de piétons.

15. Structure de réception selon l'une quelconque des revendications 1 à 14, comprenant une interface de liaison (30) entre l'aile (1) et une pièce de structure du véhicule (31).

16. Structure de réception selon la revendication 15, dans laquelle l'interface de liaison (30) consiste en des fixations glissantes.

17. Structure de réception selon la revendication 15 ou 16, dans laquelle l'interface de liaison (30) consiste en un absorbeur d'énergie destiné à traiter les chocs de têtes de piétons.

18. Structure de réception selon l'une quelconque des revendications 1 à 17, comprenant des moyens de fixation pour des organes fonctionnels du véhicule tels qu'un bocal lave-glace, un réservoir, des lave-projecteur, un éclairage ou un dispositif électronique.

19. Module extérieur de véhicule automobile comportant une aile (1) et un bloc optique (6) comprenant un vitrage (5), **caractérisé en ce qu'**il comprend une structure de réception selon l'une quelconque des revendications 1 à 18.

20. Module extérieur selon la revendication 19, dans lequel l'aile (1) est en matière plastique.

21. Aile de véhicule automobile **caractérisée en ce qu'**elle comprend une structure de réception selon l'une quelconque des revendications 1 à 18.

22. Procédé de montage d'un bloc optique (6) sur une aile de carrosserie munie d'une structure de réception selon l'une quelconque des revendications 1 à 18, **caractérisé en ce qu'**il consiste à :
- mettre en référence le vitrage (5) du bloc optique (6) sur l'aile (1) ; et
- fixer le bloc optique (6) à la structure de réception par des moyens (21-26) présents respectivement sur le bloc optique (24-26) et sur la structure de réception (21-23) pour conserver définitivement la position obtenue lors de la mise en référence.

## Claims

1. A receiver structure (8) for receiving a light unit (6) having a glass (5) and for fitting to a motor vehicle fender (1), the fender (1) and the glass (5) including means (16-20) for putting the glass (5) of the light unit into a reference position relative to the fender, the receiver structure being **characterized in that** it comprises:
· fastener means (13, 14) for fastening the receiver structure (8) to the fender; and
· fastener means (21-26) for fastening the light unit (6) to the receiver structure (8), which means conserve the reference position of the glass (5) relative to the fender as imposed by the means for putting the glass into a reference position.

2. A receiver structure according to claim 1, made out of plastics material.

3. A receiver structure according to claim 1 or claim 2, arranged to reinforce the fender (1) locally.

4. A receiver structure according to any one of claims 1 to 3, in which the fastener means for fastening the light unit to the receiver structure are the only means for fastening the light unit to the vehicle.

5. A receiver structure according to any one of claims 1 to 4, of dimensions such that it is received between top and bottom rims (11 and 12) of the fender.

6. A receiver structure according to any one of claims 1 to 5, shaped to prevent the fender (1) blistering in the vicinity of the light unit (6).

7. A receiver structure according to any one of claims 1 to 6, including support means (27, 28) for supporting the light unit fastened to the fender, said support means being designed for mounting to the structure of the vehicle.

8. A receiver structure according to claim 7, in which the support means (27, 28) are secured to the receiver structure.

9. A receiver structure according to claim 7 or claim 8, in which the support means (27, 28) have at least one degree of freedom relative to the fender.

10. A receiver structure according to claim 9, in which the support means are a slideway (28).

11. A receiver structure according to any one of claims 1 to 10, in which the fastener means for fastening the receiver structure (8) to the fender consist in adhesiving, gluing, welding, clipping, riveting, heading, or bolting the receiver structure to the fender.

12. A receiver structure according to any one of claims 1 to 11, in which the fastener means for fastening the receiver structure (8) to the fender and/or the fastener means for fastening the light unit (6) to the receiver structure (8) are breakable.

13. A receiver structure according to any one of claims 1 to 12, including means for fastening a wheel arch.

14. A receiver structure according to any one of claims 1 to 13, arranged to absorb the energy of impacts against the legs or hips of pedestrians.

15. A receiver structure to any one of claims 1 to 14, including a connection interface (30) between the fender (1) and a structural part (31) of the vehicle.

16. A receiver structure according to claim 15, in which the connection interface (30) consists in sliding fastenings.

17. A receiver structure according to claim 15 or claim 16, in which the connection interface (30) consists in an energy absorber for absorbing impacts against the heads of pedestrians.

18. A receiver structure according to any one of claims 1 to 17, including fastener means for fastening functional members of the vehicle such as a windshield washer jar, a tank, a headlight washer, lighting, or an electronic device.

19. An outside module for a motor vehicle, the module comprising a fender (1) and a light unit (6) including a glass (5), the module being **characterized in that** it includes a receiver structure according to any one of claims 1 to 18.

20. An outside module according to claim 19, in which the fender (1) is made of plastics material.

21. A motor vehicle fender, **characterized in that** it includes a receiver structure according to any one of claims 1 to 18.

22. A method of mounting a light unit (6) on a bodywork fender provided with a receiver structure according to any one of claims 1 to 18, the method being **characterized in that** it consists:
· in putting the glass (5) of the light unit (6) into a reference position relative to the fender (1); and
· in fastening the light unit (6) to the receiver structure by means (21-26) present respectively on the light unit (24-26) and on the receiver structure (21-23) for definitively conserving the position obtained when the unit is put into its reference position.

## Patentansprüche

1. Struktur zur Aufnahme (8) eines Scheinwerfereinsatzes (6), ausgestattet mit einer Verglasung (5) und zur Ausstattung eines Kotflügels (1) eines Kraftfahrzeugs bestimmt, wobei der Kotflügel (1) und die Verglasung (5) Mittel (16-20) zum Ausrichten der Verglasung (5) des Scheinwerfereinsatzes am Kotflügel umfassen, **dadurch gekennzeichnet, dass** die Struktur umfasst:
- Mittel (13, 14) zur Befestigung der Struktur zur Aufnahme (8) am Kotflügel,
- und Mittel (21-26) zur Befestigung des Scheinwerfereinsatzes (6) an der Struktur zur Aufnahme (8), welche die Ausrichtung der Verglasung (5) am Kotflügel durch die Mittel zur Ausrichtung erhalten.

2. Struktur zur Aufnahme nach Anspruch 1, ausgeführt in Kunststoff.

3. Struktur zur Aufnahme nach Anspruch 1 oder 2, angeordnet zur lokalen Verstärkung des Kotflügels (1).

4. Struktur zur Aufnahme nach einem der Ansprüche 1 bis 3, wobei die Mittel zur Befestigung des Scheinwerfereinsatzes an der Struktur zur Aufnahme die einzigen Mittel zur Befestigung des Scheinwerfereinsatzes am Fahrzeug darstellen.

5. Struktur zur Aufnahme nach einem der Ansprüche 1 bis 4, wobei die Abmessungen so beschaffen sind, dass diese sich zwischen dem oberen (11) und unteren (12) Rand des Kotflügels befindet.

6. Struktur zur Aufnahme nach einem der Ansprüche 1 bis 5, beschaffen zum Vermeiden der Ausbuchtung des Kotflügels (1) in der Nähe des Scheinwerfereinsatzes (6).

7. Struktur zur Aufnahme nach einem der Ansprüche 1 bis 6, umfassend Mittel (27, 28) zum Stützen des am Kotflügel befestigten Scheinwerfereinsatzes, wobei diese Mittel zum Stützen zum Montieren an die Struktur des Fahrzeugs bestimmt sind.

8. Struktur zur Aufnahme nach Anspruch 7, wobei die Mittel zum Stützen (27, 28) mit der Struktur zur Aufnahme verbunden sind.

9. Struktur zur Aufnahme nach Anspruch 7 oder 8, wobei die Mittel zum Stützen (27, 28) wenigstens einen Freiheitsgrad zum Kotflügel umfassen.

10. Struktur zur Aufnahme nach Anspruch 9, wobei die Stützmittel aus einer Gleitschiene (28) bestehen.

11. Struktur zur Aufnahme nach einem der Ansprüche 1 bis 10, wobei die Mittel zur Befestigung der Struktur zur Aufnahme (8) am Kotflügel aus Haften, Kleben, Schweißen, Einrasten, Nieten, Schellen oder Verschrauben der Struktur zur Aufnahme am Kotflügel bestehen.

12. Struktur zur Aufnahme nach einem der Ansprüche 1 bis 11, wobei die Mittel zur Befestigung der Struktur zur Aufnahme (8) am Kotflügel und/oder die Mittel zur Befestigung des Schelnwerferelnsatzes (6) an der Struktur zur Aufnahme (8) mit Sollbruchstellen ausgebildet sind.

13. Struktur zur Aufnahme nach einem der Ansprüche 1 bis 12, umfassend Mittel zur Befestigung eines Radkastens.

14. Struktur zur Aufnahme nach einem der Ansprüche 1 bis 13, angeordnet zum Absorbieren der Energie des Aufpralls von Beinen oder Hüften von Fußgängern.

15. Struktur zur Aufnahme nach einem der Ansprüche 1 bis 14, umfassend eine Verbindungsschnittstelle (30) zwischen dem Kotflügel (1) und einem Teil der Struktur des Fahrzeugs (31).

16. Struktur zur Aufnahme nach Anspruch 15, wobei die Verbindungsschnittstelle (30) aus Gleitbefestigungen besteht.

17. Struktur zur Aufnahme nach Anspruch 15 oder 16, wobei die Verbindungsschnittstelle (30) aus einem Energieabsorber besteht, der zum Aufnehmen des Aufpralls von Köpfen von Fußgängern bestimmt ist.

18. Struktur zur Aufnahme nach einem der Ansprüche 1 bis 17, umfassend Mittel zur Befestigung für funktionale Organe des Fahrzeugs wie ein Scheibenwaschanlagenbehälter, ein Tank, Scheinwerferwaschanlagen, eine Beleuchtung oder eine elektronische Vorrichtung.

19. Außenmodul eines Kraftfahrzeugs umfassend einen Kotflügel (1) und einen Scheinwerfereinsatz (6) umfassend eine Verglasung (5), **dadurch gekennzeichnet, dass** es eine Struktur zur Aufnahme nach einem der Ansprüche 1 bis 18 umfasst.

20. Außenmodul nach Anspruch 19, wobei der Kotflügel (1) aus Kunststoff besteht.

21. Kotflügel eines Kraftfahrzeugs, **dadurch gekennzeichnet, dass** er eine Struktur zur Aufnahme nach einem der Ansprüche 1 bis 18 umfasst.

22. Verfahren für die Montage eines Scheinwerfereinsatzes (6) an einem Kotflügel der Karosserie ausgestattet mit einer Struktur zur Aufnahme nach einem der Ansprüche 1 bis 18, **dadurch gekennzeichnet, dass** es besteht aus:
- Ausrichten der Verglasung (5) des Scheinwerfereinsatzes (6) am Kotflügel (1); und
- Befestigen des Scheinwerfereinsatzes (6) an der Struktur zur Aufnahme mit Mitteln (21-26), die jeweils am Scheinwerfereinsatz (24-26) und an der Struktur zur Aufnahme (21-23) vorhanden sind, um endgültig die beim Ausrichten erzielte Position zu erhalten.
